# EUROPEAN PATENT APPLICATION

(11) **EP 4 787 140 A1**
(43) Date of publication of application: **05.08.2026**
(21) Application number: 24883939.1
(22) Date of filing: 18.06.2024
(51) Int. Cl.: G06F 3/14, H04N 23/68, B60K 35/23

(54) **METHOD AND APPARATUS FOR DETERMINING POSE OF VIRTUAL-OBJECT DISPLAY UNIT, AND ELECTRONIC DEVICE**

(30) Priority: 31.10.2023 CN 202311440706
(71) Applicant: HUAWEI TECHNOLOGIES CO., LTD., Shenzhen 518129 (CN)
(72) Inventor: CHEN, Zhenfeng, Shenzhen, Guangdong 518129 (CN); LIN, Tao, Shenzhen, Guangdong 518129 (CN); LEI, Yuwei, Shenzhen, Guangdong 518129 (CN)
(74) Representative: Eisenführ Speiser
(86) International application number: PCT/CN2024/099699
(87) International publication number: WO 2025/091928

(57) **Abstract**

A method and an apparatus for determining a pose of a display unit for a virtual object, and an electronic device are disclosed. In the method for determining the pose of the display unit for the virtual object, a current pose of the display unit for the virtual object is determined based on a current vehicle body pose, then a shake parameter measured by a motion detection apparatus is obtained, and a pose of the display unit for the virtual object at a display moment of the virtual object is determined based on the shake parameter and the current pose of the display unit for the virtual object. In this way, the virtual object displayed by the display unit for the virtual object can match an actual scene, and does not shake due to impact of vehicle body bumping.

## Description

This application claims priority to Chinese Patent Application No. 202311440706.5, filed with the China National Intellectual Property Administration on October 31, 2023 and entitled "METHOD AND APPARATUS FOR DETERMINING POSE OF DISPLAY UNIT FOR VIRTUAL OBJECT, AND ELECTRONIC DEVICE", which is incorporated herein by reference in its entirety.

### TECHNICAL FIELD

Embodiments of this application relate to the field of intelligent terminal technologies, and in particular, to a method and an apparatus for determining a pose of a display unit for a virtual object, and an electronic device.

### BACKGROUND

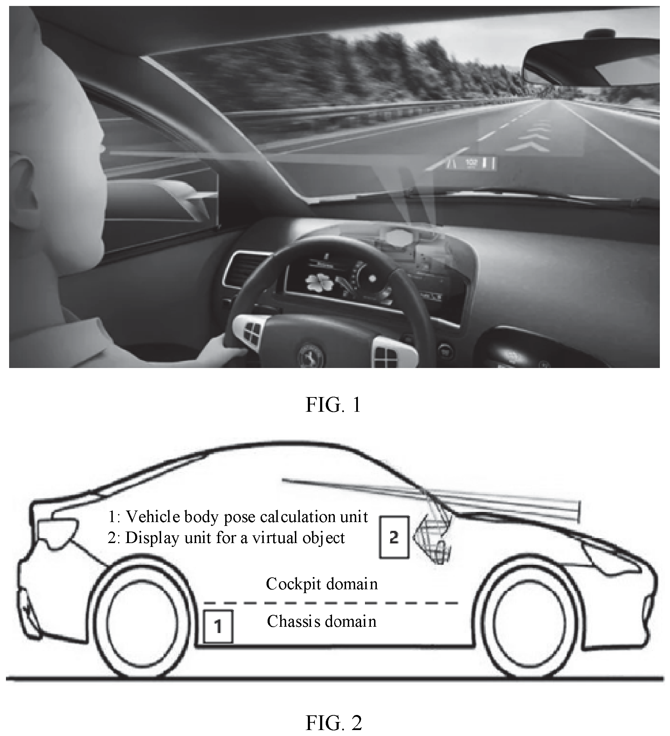

A vehicle-mounted display is an important interface for interaction between a user and a vehicle-mounted computer. Generally, the vehicle-mounted display is mounted in a dashboard or a center console, and a driver inevitably looks down to view content in the vehicle-mounted display during traveling, which may cause traveling safety problems. A vehicle-mounted head-up display (head-up display, HUD) projects information to which the driver needs to pay attention during traveling onto a windshield or another display medium in a forward field of view of the driver, to prevent the driver from frequently shifting a line of sight from a road, so as to ensure traveling safety. Augmented reality (augmented reality, AR) means that virtual digital information (for example, a text, an image, and/or a three-dimensional model) is superimposed on a real physical world for display, to achieve visual effect of fusion of the real world and a virtual world. A vehicle-mounted augmented reality head-up display (augmented reality HUD, AR-HUD) is a technology that combines augmented reality and a head-up display. FIG. 1 is a diagram of projection effect of a vehicle-mounted AR-HUD. Traveling information (for example, navigation guidance, a vehicle speed, and/or autonomous driving information) with AR effect is rendered, and then projected onto the windshield by a display unit for a virtual object (which may also be referred to as an "optical engine"), to implement fusion display of virtual traveling information and an actual driving scene. This provides immersive driving experience for the driver.

### SUMMARY

Embodiments of this application provide a method and an apparatus for determining a pose of a display unit for a virtual object, and an electronic device, and embodiments of this application further provide a computer-readable storage medium, so that the virtual object displayed by the display unit for the virtual object can match an actual scene, and does not shake due to impact of vehicle body bumping.

According to a first aspect, an embodiment of this application provides a method for determining a pose of a display unit for a virtual object, including: determining a current pose of the display unit for the virtual object based on a current vehicle body pose; obtaining a shake parameter measured by a motion detection apparatus; and determining a pose of the display unit for the virtual object at a display moment of the virtual object based on the shake parameter and the current pose of the display unit for the virtual object.

In the method for determining the pose of the display unit for the virtual object, the current pose of the display unit for the virtual object is determined based on the current vehicle body pose, then the shake parameter measured by the motion detection apparatus is obtained, and the pose of the display unit for the virtual object at the display moment of the virtual object is determined based on the shake parameter and the current pose of the display unit for the virtual object. In this way, the virtual object displayed by the display unit for the virtual object can match an actual scene, and does not shake due to impact of vehicle body bumping.

In a possible implementation, the current vehicle body pose is transmitted by a vehicle body pose calculation unit to the display unit for the virtual object, the motion detection apparatus includes a first motion detection apparatus, and the first motion detection apparatus is rigidly connected to the display unit for the virtual object. Obtaining the shake parameter measured by the motion detection apparatus includes: obtaining a first shake parameter measured by the first motion detection apparatus during a transmission latency of the vehicle body pose.

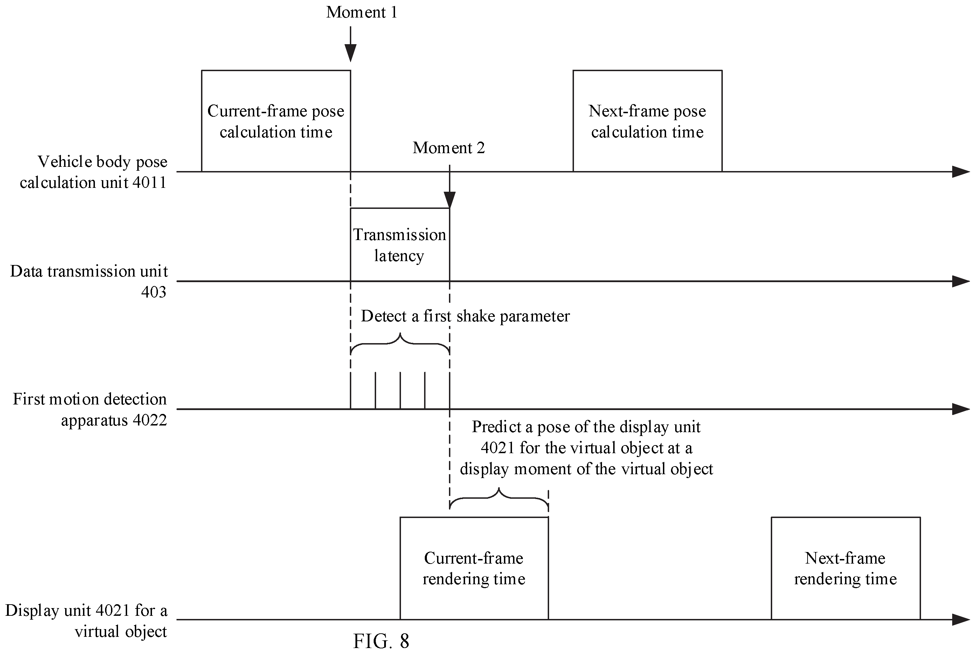

In this implementation, the current vehicle body pose transmitted by the vehicle body pose calculation unit to the display unit for the virtual object is determined by the vehicle body pose calculation unit based on data of a vehicle-mounted sensor after obtaining the data of the vehicle-mounted sensor. Refer to FIG. 8. In this implementation, the current vehicle body pose is a pose at an end moment (namely, a moment 1) of current-frame pose calculation time, and the current pose of the display unit for the virtual object may be a pose of the display unit for the virtual object at an end moment (namely, a moment 2) of the transmission latency.

In a possible implementation, determining the pose of the display unit for the virtual object at the display moment of the virtual object based on the shake parameter and the current pose of the display unit for the virtual object includes: performing compensation on the current pose of the display unit for the virtual object based on the first shake parameter; predicting a third shake parameter during rendering of the virtual object based on a historical shake parameter measured by the first motion detection apparatus; and determining the pose of the display unit for the virtual object at the display moment of the virtual object based on the third shake parameter and a compensated pose of the display unit for the virtual object.

In a possible implementation, performing the compensation on the current pose of the display unit for the virtual object based on the first shake parameter measured during the transmission latency of the vehicle body pose includes: obtaining a pose change of the display unit for the virtual object during the transmission latency of the vehicle body pose based on the first shake parameter; and performing the compensation on the current pose of the display unit for the virtual object based on the pose change.

In a possible implementation, determining the current pose of the display unit for the virtual object based on the current vehicle body pose includes: determining the current pose of the display unit for the virtual object based on the current vehicle body pose and according to a pre-calibrated physical transformation relationship between a vehicle body and the display unit for the virtual object.

In a possible implementation, determining the pose of the display unit for the virtual object at the display moment of the virtual object based on the third shake parameter and the compensated pose of the display unit for the virtual object includes: determining a pose of the display unit for the virtual object at a rendering start moment of the virtual object based on the compensated pose of the display unit for the virtual object; and obtaining the pose of the display unit for the virtual object at the display moment of the virtual object based on the third shake parameter and the pose of the display unit for the virtual object at the rendering start moment of the virtual object.

In some examples, obtaining the pose of the display unit for the virtual object at the display moment of the virtual object based on the third shake parameter and the pose of the display unit for the virtual object at the rendering start moment of the virtual object may be: obtaining an initial pose value of the display unit for the virtual object at the display moment of the virtual object based on the third shake parameter and the pose of the display unit for the virtual object at the rendering start moment of the virtual object, and smoothing the initial pose value of the display unit for the virtual object at the display moment of the virtual object based on a historical pose of the display unit for the virtual object, to finally obtain the pose of the display unit for the virtual object at the display moment of the virtual object. Smoothing the initial pose value of the display unit for the virtual object at the display moment of the virtual object is to filter out a point at which a difference between the initial pose value at the display moment of the virtual object and the historical pose of the display unit for the virtual object is large, so as to reduce a difference between the pose of the display unit for the virtual object at the display moment of the virtual object and the historical pose of the display unit for the virtual object. When the initial pose value of the display unit for the virtual object at the display moment of the virtual object is smoothed, a manner such as averaging or filtering may be used. However, embodiments of this application are not limited thereto. Any manner that can reduce the difference between the pose of the display unit for the virtual object at the display moment of the virtual object and the historical pose of the display unit for the virtual object shall fall within the protection scope of embodiments of this application.

In the foregoing implementation, the display unit for the virtual object obtains the current vehicle body pose, determines the current pose of the display unit for the virtual object based on the current vehicle body pose and according to the pre-calibrated physical transformation relationship between the vehicle body and the display unit for the virtual object, obtains the first shake parameter measured by the first motion detection apparatus during the transmission latency of the vehicle body pose, obtains the pose change of the display unit for the virtual object during the transmission latency of the vehicle body pose based on the first shake parameter measured during the transmission latency of the vehicle body pose, and performs the compensation on the current pose of the display unit for the virtual object based on the pose change. Then, the display unit for the virtual object predicts the third shake parameter during rendering of the virtual object based on the historical shake parameter measured by the first motion detection apparatus. Finally, the display unit for the virtual object determines the pose of the display unit for the virtual object at the display moment of the virtual object based on the third shake parameter and the compensated pose of the display unit for the virtual object. In this way, the virtual object displayed by the display unit for the virtual object can match an actual scene, and does not shake due to impact of vehicle body bumping.

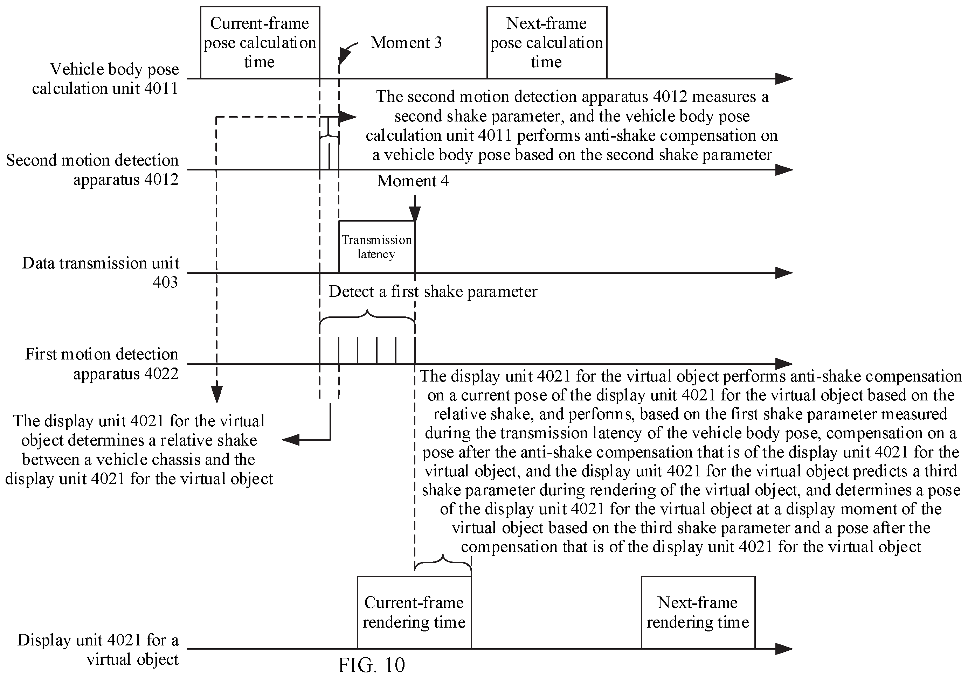

In a possible implementation, the current vehicle body pose transmitted by the vehicle body pose calculation unit to the display unit for the virtual object includes a vehicle body pose after anti-shake compensation, the vehicle body pose after the anti-shake compensation is obtained after the vehicle body pose calculation unit obtains a second jitter parameter measured by a second motion detection apparatus and performs the anti-shake compensation on the current vehicle body pose based on the second shake parameter; the second motion detection apparatus is rigidly connected to the vehicle body pose calculation unit, and the vehicle body pose calculation unit is non-rigidly connected to the display unit for the virtual object. Refer to FIG. 10. In this implementation, the current vehicle body pose obtained by the display unit for the virtual object may be a vehicle body pose at a moment 3.

In a possible implementation, determining the current pose of the display unit for the virtual object based on the current vehicle body pose includes: determining the current pose of the display unit for the virtual object based on the vehicle body pose after the anti-shake compensation and according to a pre-calibrated physical transformation relationship between a vehicle body and the display unit for the virtual object. Refer to FIG. 10. In this implementation, the current pose of the display unit for the virtual object may be a pose of the display unit for the virtual object at an end moment (namely, a moment 4) of the transmission latency.

In a possible implementation, after determining the current pose of the display unit for the virtual object based on the vehicle body pose after the anti-shake compensation and according to the pre-calibrated physical transformation relationship between the vehicle body and the display unit for the virtual object, the method further includes: determining a relative shake between a vehicle chassis and the display unit for the virtual object based on the first shake parameter measured by the first motion detection apparatus and the second shake parameter measured by the second motion detection apparatus; and performing anti-shake compensation on the current pose of the display unit for the virtual object based on the relative shake.

In a possible implementation, performing the compensation on the current pose of the display unit for the virtual object based on the first shake parameter includes: obtaining a pose change of the display unit for the virtual object during the transmission latency of the vehicle body pose based on the first shake parameter; and performing, based on the pose change, the compensation on a anti-shake-compensated pose of the display unit for the virtual object.

In a possible implementation, that the first motion detection apparatus is rigidly connected to the display unit for the virtual object includes: The first motion detection apparatus is mounted on a component rigidly connected to the display unit for the virtual object.

In the foregoing implementation, the virtual object displayed by the display unit for the virtual object can match an actual scene, and does not shake due to impact of vehicle body bumping. When the vehicle body pose calculation unit on the chassis is non-rigidly connected to the display unit for the virtual object, in the foregoing implementation, anti-shake compensation and latency compensation are performed on the pose of the display unit for the virtual object based on the first shake parameter measured by the first motion detection apparatus and the second shake parameter measured by the second motion detection apparatus. This can resolve a problem of a pose calculation error caused by a relative shake and the data transmission latency between the vehicle body pose calculation unit and the display unit for the virtual object. In addition, in this embodiment, the pose of the display unit for the virtual object at the display moment of the virtual object is further predicted based on the historical shake parameter of the display unit for the virtual object, to resolve a problem that the pose of the display unit for the virtual object at the display moment of the virtual object cannot be obtained because there is no sensor data during rendering.

In a possible implementation, the motion detection apparatus includes a second motion detection apparatus, the second motion detection apparatus is rigidly connected to a vehicle body pose calculation unit, and the vehicle body pose calculation unit is rigidly connected to the display unit for the virtual object. Determining the pose of the display unit for the virtual object at the display moment of the virtual object based on the shake parameter and the current pose of the display unit for the virtual object includes: performing anti-shake compensation on the current pose of the display unit for the virtual object based on a shake parameter currently measured by the second motion detection apparatus; predicting shake parameters of the display unit for the virtual object during pose transmission and rendering of the virtual object based on a historical shake parameter measured by the motion detection apparatus; and determining the pose of the display unit for the virtual object at the display moment of the virtual object based on the predicted shake parameters and a anti-shake-compensated pose of the display unit for the virtual object.

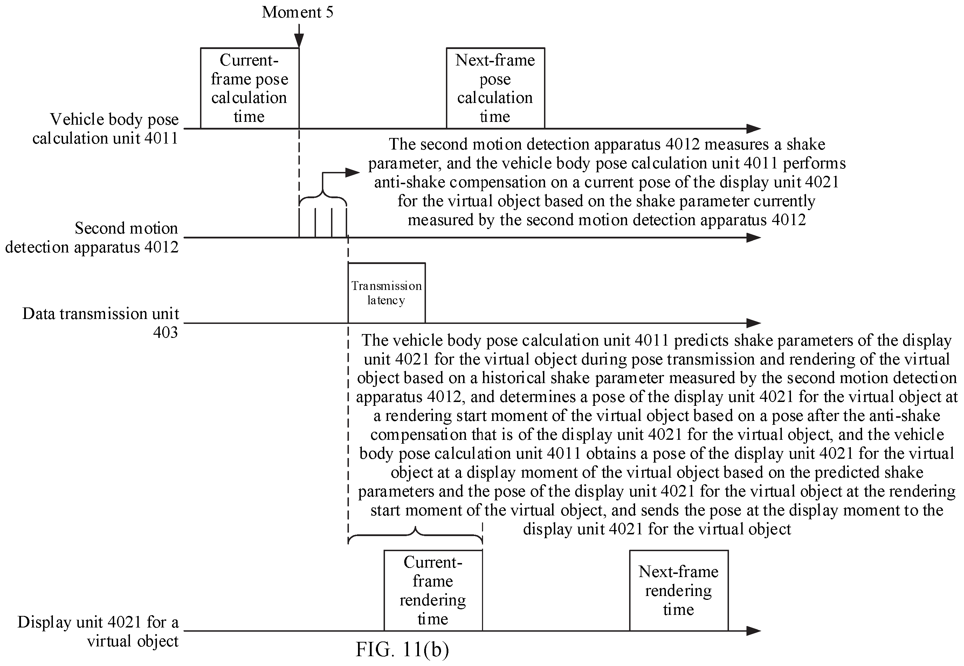

In this implementation, the vehicle body pose calculation unit may obtain the current vehicle body pose. Specifically, the vehicle body pose calculation unit may obtain data of a vehicle-mounted sensor, and determine the current vehicle body pose based on the data of the vehicle-mounted sensor. Refer to FIG. 11(b). In this implementation, the current vehicle body pose is determined by the vehicle body pose calculation unit based on the data of the vehicle-mounted sensor. Therefore, the current vehicle body pose may be a vehicle body pose at an end moment (namely, a moment 5) of current-frame pose calculation time. In addition, the current pose of the display unit 4021 for the virtual object is determined by the vehicle body pose calculation unit based on the current vehicle body pose. In this case, it may be considered that the vehicle body pose calculation unit can determine the current pose of the display unit for the virtual object upon determining the current vehicle body pose. Therefore, with reference to FIG. 11(b), in this implementation, the current pose of the display unit for the virtual object may be understood as a pose of the display unit for the virtual object at the moment 5.

In a possible implementation, determining the pose of the display unit for the virtual object at the display moment of the virtual object based on the predicted shake parameters and the anti-shake-compensated pose of the display unit for the virtual object includes: determining a pose of the display unit for the virtual object at a rendering start moment of the virtual object based on the anti-shake-compensated pose of the display unit for the virtual object; and obtaining the pose of the display unit for the virtual object at the display moment of the virtual object based on the predicted shake parameters and the pose of the display unit for the virtual object at the rendering start moment of the virtual object.

In this implementation, that the vehicle body pose calculation unit obtains the pose of the display unit for the virtual object at the display moment of the virtual object based on the predicted shake parameters and the pose of the display unit for the virtual object at the rendering start moment of the virtual object may be: The vehicle body pose calculation unit obtains an initial pose value of the display unit for the virtual object at the display moment of the virtual object based on the pose of the display unit for the virtual object at the rendering start moment of the virtual object and the predicted shake parameters, smooths the initial pose value of the display unit for the virtual object at the display moment of the virtual object based on a historical pose of the display unit for the virtual object, to finally obtain the pose of the display unit for the virtual object at the display moment of the virtual object, and sends the pose at the display moment to the display unit for the virtual object.

In the foregoing implementation, after obtaining the current vehicle body pose, the vehicle body pose calculation unit determines the current pose of the display unit for the virtual object based on the current vehicle body pose. Then, the vehicle body pose calculation unit obtains the shake parameter currently measured by the second motion detection apparatus rigidly connected to the vehicle body pose calculation unit, and performs the anti-shake compensation on the current pose of the display unit for the virtual object based on the currently measured shake parameter. Further, the vehicle body pose calculation unit predicts the shake parameters of the display unit for the virtual object during pose transmission and rendering of the virtual object based on the historical shake parameter measured by the second motion detection apparatus, and determines the pose of the display unit for the virtual object at the display moment of the virtual object based on the predicted shake parameters and the anti-shake-compensated pose of the display unit for the virtual object. Finally, the vehicle body pose calculation unit transmits the pose of the display unit for the virtual object at the display moment of the virtual object to the display unit for the virtual object. In this way, the virtual object displayed by the display unit for the virtual object can match an actual scene, and does not shake due to impact of vehicle body bumping.

According to a second aspect, an embodiment of this application provides an apparatus for determining a pose of a display unit for a virtual object. The apparatus is included in an electronic device, and the apparatus has a function of implementing an action of the electronic device in the first aspect and the possible implementation of the first aspect. The function may be implemented by hardware, or may be implemented by executing corresponding software by hardware. The hardware or the software includes one or more modules or units corresponding to the foregoing function, for example, an obtaining module and a determining module.

According to a third aspect, an embodiment of this application provides an electronic device, including one or more processors, a memory, a plurality of applications, and one or more computer programs. The one or more computer programs are stored in the memory, the one or more computer programs include instructions, and when the instructions are executed by the electronic device, the electronic device is enabled to perform the method provided in the first aspect.

It should be understood that technical solutions of the second aspect and the third aspect of embodiments of this application are consistent with technical solutions of the first aspect of embodiments of this application, and beneficial effects achieved by the aspects and corresponding feasible implementations are similar. Details are not described again.

According to a fourth aspect, an embodiment of this application provides a computer-readable storage medium. The computer-readable storage medium stores a computer program. When the computer program runs on a computer, the computer is enabled to perform the method provided in the first aspect.

According to a fifth aspect, an embodiment of this application provides a computer program. When the computer program is executed by a computer, the computer program is used to perform the method provided in the first aspect.

In a possible design, all or a part of the program in the fifth aspect may be stored in a storage medium that is packaged together with a processor, or may be stored in a memory that is not packaged together with a processor.

### BRIEF DESCRIPTION OF DRAWINGS

FIG. 1 is a diagram of projection effect of a vehicle-mounted AR-HUD;
FIG. 2 is a diagram of mounting of a vehicle-mounted display unit for a virtual object;
FIG. 3 is a diagram of a display principle of a vehicle-mounted display unit for a virtual object;
FIG. 4 is a diagram of a system architecture according to an embodiment of this application;
FIG. 5 is a diagram of hardware according to an embodiment of this application;
FIG. 6 is a diagram of a structure of a vehicle body pose calculation unit 4011 according to an embodiment of this application;
FIG. 7 is a flowchart of a method for determining a pose of a display unit for a virtual object according to an embodiment of this application;
FIG. 8 is a diagram of operating timing according to an embodiment of this application;
FIG. 9 is a flowchart of a method for determining a pose of a display unit for a virtual object according to another embodiment of this application;
FIG. 10 is a diagram of operating timing according to another embodiment of this application;
FIG. 11(a) is a flowchart of a method for determining a pose of a display unit for a virtual object according to still another embodiment of this application;
FIG. 11(b) is a diagram of operating timing according to still another embodiment of this application;
FIG. 12 is a diagram of a structure of an electronic device according to an embodiment of this application; and
FIG. 13 is a diagram of a structure of an electronic device according to another embodiment of this application.

### DESCRIPTION OF EMBODIMENTS

Terms used in implementations of this application are merely used to explain specific embodiments of this application, but are not intended to limit this application.

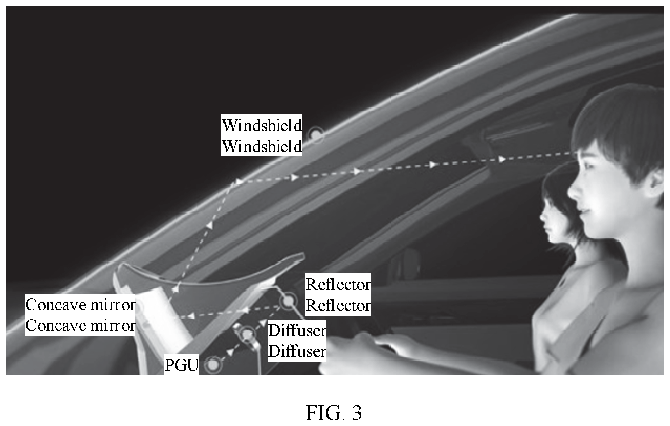

FIG. 2 is a diagram of mounting of a vehicle-mounted display unit for a virtual object. FIG. 3 is a diagram of a display principle of a vehicle-mounted display unit for a virtual object. As shown in FIG. 2 and FIG. 3, an AR-HUD optical engine (that is, the display unit for the virtual object in FIG. 2) is generally mounted in front of a driver seat in a cockpit of a vehicle, and a sensor and a processor that are configured to calculate a vehicle body pose (that is, a vehicle body pose calculation unit in FIG. 2) are generally mounted outside the cockpit (for example, on a vehicle frame, a chassis, or a vehicle body surface). To achieve display effect of virtual-real combination, the AR-HUD optical engine needs to accurately calculate the vehicle body pose by using the vehicle-mounted sensor, and then calculate an accurate pose of the AR-HUD optical engine in the real world according to a position relationship between a vehicle body and the AR-HUD optical engine, to calculate a 3D projection position of virtual traveling information on a windshield. Therefore, calculation precision of a pose and anti-shake processing effect affect experience of virtual-real combination of an AR-HUD.

As shown in FIG. 2, generally, sensor data or pose data is obtained by the vehicle body pose calculation unit in a chassis domain, the display unit for the virtual object that uses the data is located in a cockpit domain, and there is usually a long latency (20 ms to 100 ms) when the data is transmitted from the chassis domain to the cockpit domain. As a result, a pose transmitted to the display unit for the virtual object lags behind an actual situation. If the pose is used to render and display the virtual traveling information, the virtual object does not match an actual scene. In addition, due to particularity of a suspension structure of the vehicle, the cockpit and the chassis are usually not rigidly connected, and there is relative motion between the cockpit and the chassis during traveling due to a bumpy road. Even if there is no data transmission latency, the relative motion between the cockpit and the chassis introduces an error when the vehicle body pose calculated by the sensor mounted in the chassis domain is used to calculate the pose of the display unit for the virtual object mounted in the cockpit domain. Consequently, the virtual traveling information displayed by the AR-HUD does not match the actual scene or has an obvious shake.

Most of existing vehicle-mounted HUD anti-shake technologies are compensation for a shake of the entire vehicle body or compensation for a relative shake between internal components of the display unit for the virtual object, but do not resolve problems of pose lag and a shake that are caused by a data transmission latency, and do not resolve a problem of a relative shake caused when the display unit for the virtual object is non-rigidly connected to the vehicle-mounted sensor. The non-rigid connection means that the display unit for the virtual object and the vehicle-mounted sensor have relative motion and are not in fixed connection to each other.

A basic principle of an existing vehicle-mounted HUD anti-shake solution is mounting a mechanical apparatus to suppress a shake. An anti-shake apparatus may be commonly mounted between the cockpit and the display unit for the virtual object, or between internal components of the display unit for the virtual object.

In an implementation solution, an HUD display medium is connected to the cockpit through a shock absorption mechanism, to avoid a display shake caused by relative motion between the display medium and the cockpit. In another implementation solution, a support rod fastening block and a support rod sleeve are connected to an HUD display lens, and the HUD display lens is fastened by using a special mechanical structure, to avoid a shake of the display lens. In still another implementation solution, an HUD reflector support is designed with pivot connection and multi-point fastening, to reduce a shake of a reflector.

However, the foregoing implementation solution is only for a relative shake between the display unit for the virtual object and the cockpit, or is only for a relative shake between internal components of the display unit for the virtual object. When the display unit for the virtual object is non-rigidly connected to the vehicle-mounted sensor, it is impossible to resolve a problem of a shake of the virtual object caused by a relative shake between the display unit for the virtual object and the vehicle-mounted sensor and a problem of mismatch of the virtual object caused by the transmission latency of the pose data.

A basic principle of another existing vehicle-mounted HUD anti-shake solution is detecting a shake situation of the entire vehicle body relative to the ground, and controlling the display unit for the virtual object to perform corresponding shake compensation motion. An implementation solution is as follows: An inertial measurement apparatus mounted on the vehicle body is used to obtain a shake parameter (including an offset and an angle) of the vehicle body relative to the ground, and then a control circuit is adjusted to adjust an HUD image generation apparatus (that is, the display unit for the virtual object) in a direction opposite to a shake of the vehicle body, to compensate for an HUD image shake caused by the shake of the vehicle body.

However, there is a data transmission latency in a process in which the inertial measurement apparatus mounted on the vehicle body transmits the shake parameter to the HUD image generation apparatus, the shake parameter used for HUD image shake compensation lags behind an actual shake situation, and this solution cannot process a shake during the transmission latency. In addition, when the HUD image generation apparatus is controlled, based on the shake parameter, to perform compensation motion, a response latency of the control circuit exists, and this solution cannot process a shake during the response latency. In addition, when the HUD image generation apparatus is non-rigidly connected to the vehicle body or a sensor on the vehicle body, this solution cannot resolve a problem of a shake of the virtual object caused by a relative shake between the HUD image generation apparatus and the vehicle body or the sensor on the vehicle body.

A basic principle of still another existing vehicle-mounted HUD anti-shake solution is detecting a shake situation of internal components of the display unit for the virtual object, and adjusting a display position of the display unit for the virtual object to perform anti-shake compensation. An implementation solution is as follows: An angular velocity sensor is mounted on each of a head-up display and a rotatable reflector inside the display unit for the virtual object, and relative shake parameters of the two internal components are detected, to calculate a compensation amount for an HUD display image and perform compensation display.

However, this solution is only for an image shake caused by a relative shake between the internal components of the display unit for the virtual object. When the display unit for the virtual object is non-rigidly connected to the vehicle-mounted sensor, it is impossible to resolve a problem of a shake of the virtual object caused by a relative shake between the display unit for the virtual object and the vehicle-mounted sensor and a problem of mismatch of the virtual object caused by the transmission latency of the pose data.

A basic principle of still another existing vehicle-mounted HUD anti-shake solution is detecting a shake situation of the display unit for the virtual object and the cockpit, and adjusting a display position of the display unit for the virtual object to perform anti-shake compensation. An implementation solution is as follows: An image sensor mounted on the display unit for the virtual object is used to detect a shake situation of a positioning sign on the windshield of the vehicle, to calculate a shake situation of an HUD projection image relative to the windshield, and then offset compensation is performed on a display image. However, the foregoing solution is only for a relative shake between the display unit for the virtual object and the cockpit (for example, the windshield). When the display unit for the virtual object is non-rigidly connected to the vehicle-mounted sensor, it is impossible to resolve a problem of a shake of the virtual object caused by a relative shake between the display unit for the virtual object and the vehicle-mounted sensor and a problem of mismatch of the virtual object caused by the transmission latency of the pose data.

Generally, the vehicle-mounted sensor (for example, an inertial measurement unit (inertial measurement unit, IMU), a wheel speedometer, a camera (camera), a lidar (light detection and ranging, Lidar), a global navigation satellite system (global navigation satellite system, GNSS), and/or real-time kinematic (real-time kinematic, RTK)) that is configured to calculate the vehicle body pose is mounted on the vehicle body (for example, on a vehicle shell, the chassis, an axle, or a wheel). The AR-HUD display unit for the virtual object is generally mounted in front of the driver seat in the cockpit. The vehicle-mounted sensor and the display unit for the virtual object are generally non-rigidly connected, and have a relative shake during traveling of the vehicle. When displaying the virtual object, the display unit for the virtual object determines a display position of the virtual object in a projection image based on a pose of the display unit for the virtual object and a pose of the virtual object in a real scene. Generally, the vehicle-mounted sensor is used to obtain the vehicle body pose through calculation, and then the pose of the display unit for the virtual object is calculated based on the vehicle body pose. The vehicle-mounted sensor and the vehicle body pose calculation unit are generally located in the chassis domain, the display unit for the virtual object is generally located in the cockpit domain, and there is a latency when the sensor data or the pose data is transmitted from the chassis domain to the cockpit domain. A relative shake between the vehicle-mounted sensor and the display unit for the virtual object during the latency causes an inaccurate pose. In addition, the latency causes a pose obtained by the display unit for the virtual object to lag behind an actual situation. When the display unit for the virtual object is non-rigidly connected to the vehicle-mounted sensor, if there is a relative shake and a data transmission latency between the display unit for the virtual object and the vehicle-mounted sensor, the calculated pose of the display unit for the virtual object is inaccurate, and consequently, the virtual object does not match the real scene or has a shake.

In addition, there is no sensor data in a time period from calculating the pose of the display unit for the virtual object to actually displaying the virtual object, and a pose of the display unit for the virtual object at a display moment needs to be predicted in advance based on historical sensor data.

As described above, none of the existing technical solutions resolves a problem of a relative shake between the display unit for the virtual object and the vehicle-mounted sensor, a problem of pose lag caused by a data transmission latency, and a problem of pose lag caused by a virtual object rendering latency.

Based on the foregoing problems, embodiments of this application provide a method for determining a pose of a display unit for a virtual object. When the display unit for the virtual object is non-rigidly connected to a vehicle-mounted sensor, the method for determining the pose of the display unit for the virtual object provided in embodiments of this application can detect a relative shake between the display unit for the virtual object and the vehicle-mounted sensor and perform compensation. When there is a latency in transmission of data from the vehicle-mounted sensor to the display unit for the virtual object, embodiments of this application can resolve a problem of pose lag caused by the latency, and predict a pose of the display unit for the virtual object at a display moment of the virtual object in advance based on historical sensor data, so that the virtual object displayed by the display unit for the virtual object better matches a real scene. It should be noted that, in embodiments of this application, a pose may include a position and a posture, that is, a three-dimensional translation relationship and a three-dimensional rotation relationship of a point relative to a coordinate system.

In embodiments of this application, motion detection apparatuses mounted on the display unit for the virtual object and a vehicle body are used to obtain shake parameters, to perform anti-shake compensation and advance prediction on a pose of the display unit for the virtual object, so that a placement position of the virtual object better matches a real scene.

Specifically, in embodiments of this application, based on a shake parameter of the vehicle-mounted sensor on the vehicle body and a shake parameter of the display unit for the virtual object, relative motion between the vehicle-mounted sensor and the display unit for the virtual object during data transmission due to non-rigid connection is detected, and anti-shake compensation and latency compensation are performed on a calculated pose of the display unit for the virtual object. In addition, shake parameters during rendering and display of the virtual object are calculated based on a historical shake parameter of the display unit for the virtual object and a historical shake parameter of the vehicle-mounted sensor on the vehicle body, and the pose of the display unit for the virtual object at the display moment of the virtual object is predicted in advance based on a pose of the display unit for the virtual object at a current latest moment and the predicted shake parameters.

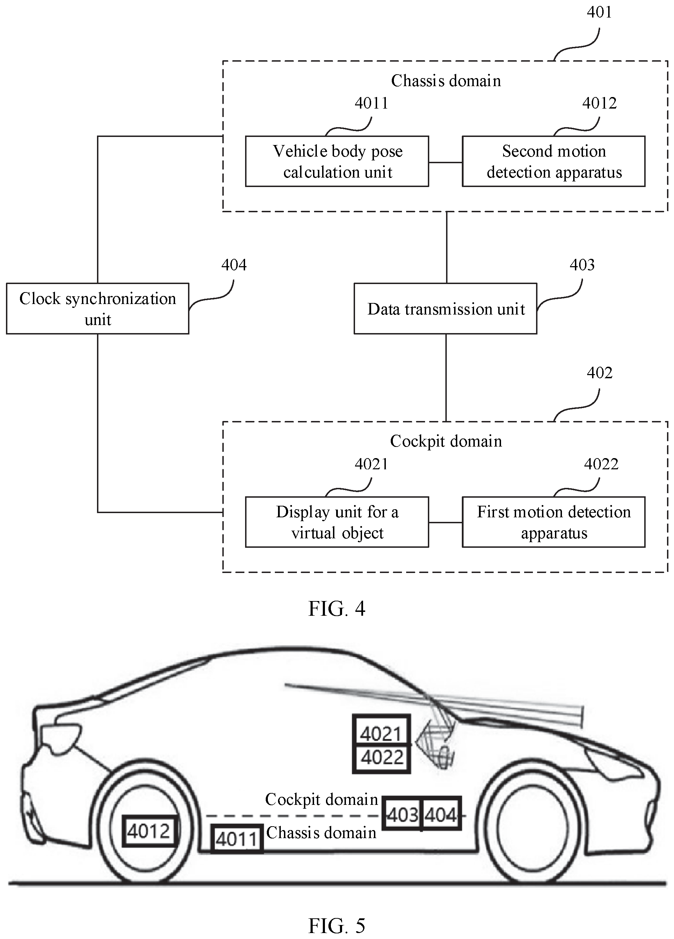

The method for determining the pose of the display unit for the virtual object provided in embodiments of this application may be applied to an AR-HUD system of an intelligent vehicle. FIG. 4 is a diagram of a system architecture according to an embodiment of this application. As shown in FIG. 4, the system architecture may include a chassis domain 401, a cockpit domain 402, a data transmission unit 403, and a clock synchronization unit 404.

The chassis domain 401 may include a vehicle body pose calculation unit 4011 and a second motion detection apparatus 4012. The cockpit domain 402 may include a display unit 4021 for a virtual object and a first motion detection apparatus 4022. Pose data or sensor data is transmitted between the chassis domain 401 and the cockpit domain 402 through the data transmission unit 403. Because apparatuses of the chassis domain 401 and the cockpit domain 402 are generally non-rigidly connected, and there is a data transmission latency between the apparatuses, the clock synchronization unit 404 is required for clock synchronization between the chassis domain 401 and the cockpit domain 402.

The chassis domain may also be referred to as a mobile data center (mobile data center, MDC) domain. The cockpit domain may also be referred to as a cockpit domain controller (cockpit domain controller, CDC) domain.

Specifically, the vehicle body pose calculation unit 4011 may generally include an MDC and various vehicle-mounted sensors. The MDC may include a central processing unit (central processing unit, CPU), a graphics processing unit (graphics processing unit, GPU), a cache, a data communication bus, and the like. The vehicle body pose calculation unit 4011 is mainly configured to: obtain data of a vehicle-mounted sensor, and calculate a vehicle body pose or a pose of the display unit for the virtual object. In this embodiment of this application, the vehicle body pose calculation unit 4011 may also be referred to as a vehicle-mounted sensor configured to calculate a vehicle body pose.

The second motion detection apparatus 4012 is generally mounted on a vehicle component (for example, a vehicle shell, a chassis, or an axle) rigidly connected to the vehicle body pose calculation unit 4011. A common second motion detection apparatus includes an accelerometer, a gyroscope, a camera, a lidar, a photoelectric sensor, an inertial measurement unit (inertial measurement unit, IMU), an inertial element, or the like, and is mainly configured to: detect a shake parameter of a vehicle-mounted sensor that is in the chassis domain 401 and that is configured to calculate a vehicle body pose, and perform anti-shake compensation on the vehicle body pose based on the shake parameter.

The data transmission unit 403 generally includes a data communication line and a data transmission control unit, and is mainly configured to transmit pose data or sensor data of the chassis domain 401 to the cockpit domain 402.

The clock synchronization unit 404 is configured to ensure clock synchronization between the apparatus of the chassis domain 401 and the apparatus of the cockpit domain 402.

The first motion detection apparatus 4022 is generally mounted on the display unit 4021 for the virtual object, or mounted on a component rigidly connected to the display unit 4021 for the virtual object, for example, a dashboard, a steering wheel, a dashcam, or an interior rearview mirror. A common first motion detection apparatus 4022 includes an accelerometer, a gyroscope, a camera, a lidar, a photoelectric sensor, an IMU, an inertial element, or the like, and is mainly configured to obtain a shake parameter of the display unit 4021 for the virtual object.

The display unit 4021 for the virtual object, namely, an AR-HUD display unit for a virtual object (for example, an AR-HUD optical engine/a projector), is mainly configured to: render the virtual object, and project the virtual object onto a windshield of a vehicle. During specific implementation, the display unit 4021 for the virtual object may be an HUD optical engine, a projector, an HUD display, or the like.

FIG. 5 is a diagram of hardware according to an embodiment of this application. During specific mounting, with reference to FIG. 5, the vehicle body pose calculation unit 4011, the second motion detection apparatus 4012, the display unit 4021 for the virtual object, the first motion detection apparatus 4022, the data transmission unit 403, and the clock synchronization unit 404 may be separately mounted in two areas: the chassis domain 401 and the cockpit domain 402. The vehicle body pose calculation unit 4011 and the second motion detection apparatus 4012 are mounted in the chassis domain 401. The display unit 4021 for the virtual object and the first motion detection apparatus 4022 are mounted in the cockpit domain 402. There is a data transmission latency between the chassis domain 401 and the cockpit domain 402, and apparatuses in the two areas perform clock synchronization through the clock synchronization unit 404.

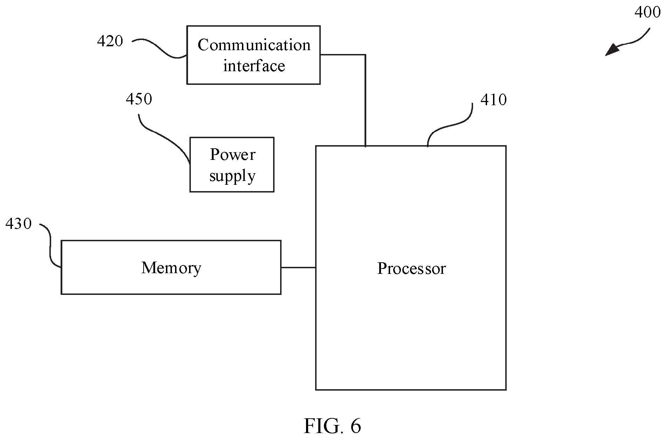

During specific implementation, the vehicle body pose calculation unit 4011 may be implemented by using a structure shown in FIG. 6. FIG. 6 is a diagram of a structure of the vehicle body pose calculation unit 4011 according to an embodiment of this application. As shown in FIG. 6, the vehicle body pose calculation unit 4011 may include a processor 410 and a communication interface 420. Optionally, the vehicle body pose calculation unit 4011 may further include a memory 430. The processor 410, the communication interface 420, and the memory 430 may communicate with each other through an internal connection path, to transmit a control signal and/or a data signal. The memory 430 is configured to store a computer program. The processor 410 is configured to invoke the computer program from the memory 430 and run the computer program.

The processor 410 and the memory 430 may be combined into one processing apparatus, and are more commonly components independent of each other. The processor 410 is configured to execute program code stored in the memory 430. During specific implementation, the memory 430 may alternatively be integrated into the processor 410, or may be independent of the processor 410.

Optionally, the vehicle body pose calculation unit 4011 may further include a power supply 450, configured to supply power to various components or circuits in the vehicle body pose calculation unit 4011.

It should be understood that the processor 410 in the vehicle body pose calculation unit 4011 shown in FIG. 6 may be a system on chip SoC. The processor 410 may include a CPU, and may further include another type of processor, for example, a GPU.

Similarly, the display unit 4021 for the virtual object may also be implemented by using the structure shown in FIG. 6. Details are not described herein again.

The method for determining the pose of the display unit for the virtual object provided in embodiments of this application may include: determining a current pose of the display unit for the virtual object based on a current vehicle body pose, then obtaining a shake parameter measured by a motion detection apparatus, and finally determining a pose of the display unit for the virtual object at a display moment of the virtual object based on the shake parameter and the current pose of the display unit for the virtual object. With reference to FIG. 4, FIG. 5, and FIG. 6, the following specifically describes the method for determining the pose of the display unit for the virtual object provided in embodiments of this application.

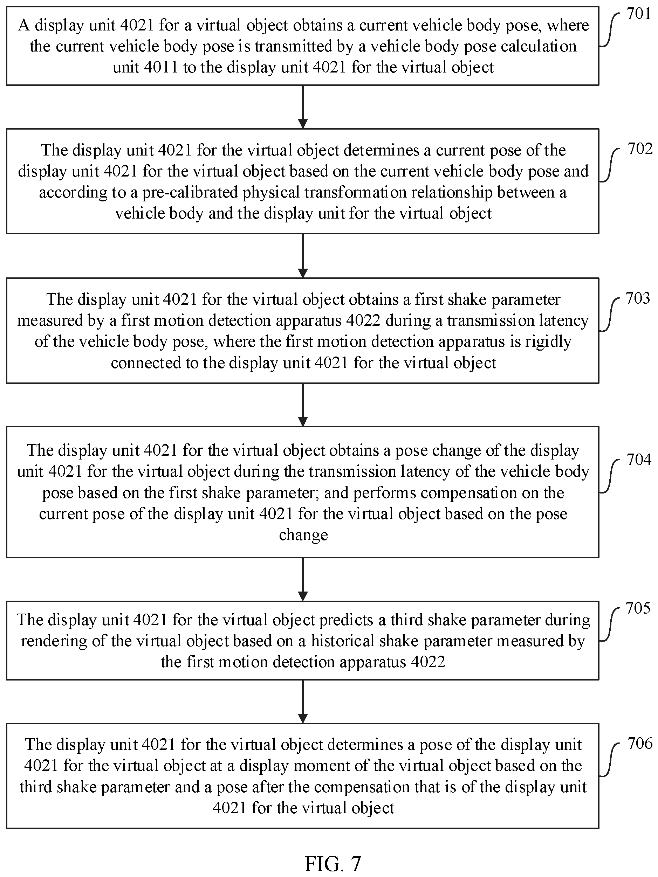

FIG. 7 is a flowchart of a method for determining a pose of a display unit for a virtual object according to an embodiment of this application. As shown in FIG. 7, the method for determining the pose of the display unit for the virtual object may include the following steps.

Step 701: A display unit 4021 for a virtual object obtains a current vehicle body pose, where the current vehicle body pose is transmitted by a vehicle body pose calculation unit 4011 to the display unit 4021 for the virtual object.

In this embodiment, the current vehicle body pose transmitted by the vehicle body pose calculation unit 4011 to the display unit 4021 for the virtual object is determined by the vehicle body pose calculation unit 4011 based on data of a vehicle-mounted sensor after obtaining the data of the vehicle-mounted sensor. Refer to FIG. 8. In this embodiment, the current vehicle body pose is a pose at an end moment (namely, a moment 1) of current-frame pose calculation time.

Step 702: The display unit 4021 for the virtual object determines a current pose of the display unit 4021 for the virtual object based on the current vehicle body pose and according to a pre-calibrated physical transformation relationship between a vehicle body and the display unit for the virtual object.

The current pose of the display unit 4021 for the virtual object is determined by the display unit 4021 for the virtual object based on the current vehicle body pose after obtaining the current vehicle body pose transmitted by the vehicle body pose calculation unit 4011. Therefore, in this embodiment, with reference to FIG. 8, the current pose of the display unit 4021 for the virtual object may be a pose of the display unit 4021 for the virtual object at an end moment (namely, a moment 2) of a transmission latency.

Step 703: The display unit 4021 for the virtual object obtains a first shake parameter measured by a first motion detection apparatus 4022 during the transmission latency of the vehicle body pose, where the first motion detection apparatus is rigidly connected to the display unit 4021 for the virtual object, and the first shake parameter may be a shake parameter of the display unit 4021 for the virtual object.

Because apparatuses of a chassis domain 401 and a cockpit domain 402 are generally non-rigidly connected, and there is a data transmission latency between the apparatuses, the transmission latency of the vehicle body pose may be time used by the vehicle body pose calculation unit 4011 to transmit the current vehicle body pose to the display unit 4021 for the virtual object.

In this embodiment, that the first motion detection apparatus is rigidly connected to the display unit 4021 for the virtual object may be: The first motion detection apparatus is mounted on a component rigidly connected to the display unit 4021 for the virtual object.

Step 704: The display unit 4021 for the virtual object obtains a pose change of the display unit 4021 for the virtual object during the transmission latency of the vehicle body pose based on the first shake parameter; and performs compensation on the current pose of the display unit 4021 for the virtual object based on the pose change.

Step 705: The display unit 4021 for the virtual object predicts a third shake parameter during rendering of the virtual object based on a historical shake parameter measured by the first motion detection apparatus 4022.

Step 706: The display unit 4021 for the virtual object determines a pose of the display unit 4021 for the virtual object at a display moment of the virtual object based on the third shake parameter and a compensated pose of the display unit 4021 for the virtual object.

Specifically, that the display unit 4021 for the virtual object determines the pose of the display unit 4021 for the virtual object at the display moment of the virtual object based on the third shake parameter and the compensated pose of the display unit 4021 for the virtual object may be: The display unit 4021 for the virtual object determines a pose of the display unit 4021 for the virtual object at a rendering start moment of the virtual object based on the compensated pose of the display unit for the virtual object; and obtains the pose of the display unit 4021 for the virtual object at the display moment of the virtual object based on the third shake parameter and the pose of the display unit 4021 for the virtual object at the rendering start moment of the virtual object.

During specific implementation, obtaining the pose of the display unit 4021 for the virtual object at the display moment of the virtual object based on the third shake parameter and the pose of the display unit 4021 for the virtual object at the rendering start moment of the virtual object may be: obtaining an initial pose value of the display unit 4021 for the virtual object at the display moment of the virtual object based on the pose of the display unit 4021 for the virtual object at the rendering start moment of the virtual object and the third shake parameter, and smoothing the initial pose value of the display unit 4021 for the virtual object at the display moment of the virtual object based on a historical pose of the display unit 4021 for the virtual object, to obtain the pose of the display unit 4021 for the virtual object at the display moment of the virtual object.

Smoothing the initial pose value of the display unit 4021 for the virtual object at the display moment of the virtual object is to filter out a point at which a difference between the initial pose value at the display moment of the virtual object and the historical pose of the display unit 4021 for the virtual object is large, so as to reduce a difference between the pose of the display unit 4021 for the virtual object at the display moment of the virtual object and the historical pose of the display unit 4021 for the virtual object. When the initial pose value of the display unit 4021 for the virtual object at the display moment of the virtual object is smoothed, a manner such as averaging or filtering may be used. However, embodiments of this application are not limited thereto. Any manner that can reduce the difference between the pose of the display unit 4021 for the virtual object at the display moment of the virtual object and the historical pose of the display unit 4021 for the virtual object shall fall within the protection scope of embodiments of this application.

The method provided in this embodiment may be applied to a scenario in which the vehicle body pose calculation unit 4011 on a chassis is rigidly connected to the display unit 4021 for the virtual object. In some examples, when the vehicle body pose calculation unit 4011 on the chassis is rigidly connected to the display unit 4021 for the virtual object, the display unit 4021 for the virtual object only needs to obtain the first shake parameter from the first motion detection apparatus 4022 to perform latency compensation and advance prediction on the pose of the display unit 4021 for the virtual object. FIG. 8 is a diagram of operating timing according to an embodiment of this application. As shown in FIG. 8, in this embodiment, there is no relative shake between the vehicle body pose calculation unit 4011 and the display unit 4021 for the virtual object. In this case, there is no need to obtain a shake parameter measured by a second motion detection apparatus 4012, and only the first shake parameter measured by the first motion detection apparatus needs to be used to perform transmission latency compensation and advance prediction.

In the method for determining the pose of the display unit for the virtual object, the display unit 4021 for the virtual object obtains the current vehicle body pose, determines the current pose of the display unit 4021 for the virtual object based on the current vehicle body pose, obtains the first shake parameter measured by the first motion detection apparatus 4022 during the transmission latency of the vehicle body pose, obtains the pose change of the display unit 4021 for the virtual object during the transmission latency of the vehicle body pose based on the first shake parameter measured during the transmission latency of the vehicle body pose, and performs the compensation on the current pose of the display unit 4021 for the virtual object based on the pose change. Then, the display unit 4021 for the virtual object predicts the third shake parameter during rendering of the virtual object based on the historical shake parameter measured by the first motion detection apparatus 4022. Finally, the display unit 4021 for the virtual object determines the pose of the display unit 4021 for the virtual object at the display moment of the virtual object based on the third shake parameter and the compensated pose of the display unit 4021 for the virtual object. In this way, the virtual object displayed by the display unit 4021 for the virtual object can match an actual scene, and does not shake due to impact of vehicle body bumping.

In this embodiment, when the vehicle body pose calculation unit 4011 is rigidly connected to the display unit 4021 for the virtual object, the display unit 4021 for the virtual object performs latency compensation on the pose of the display unit for the virtual object based on the first shake parameter measured by the first motion detection apparatus 4022. This can resolve a problem of a pose calculation error caused by a transmission latency of pose data or sensor data. In addition, the pose of the display unit 4021 for the virtual object at the display moment of the virtual object may be further predicted in advance based on the historical shake parameter of the display unit 4021 for the virtual object, to resolve a problem that the pose of the display unit 4021 for the virtual object at the display moment of the virtual object cannot be obtained because there is no sensor data during rendering of the virtual object.

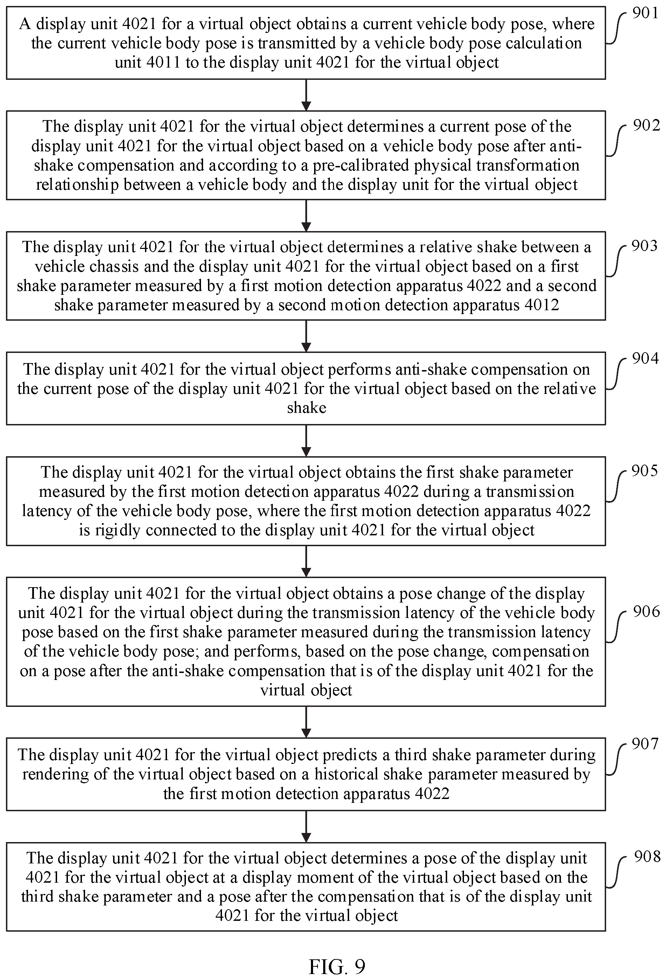

FIG. 9 is a flowchart of a method for determining a pose of a display unit for a virtual object according to another embodiment of this application. As shown in FIG. 9, the method for determining the pose of the display unit for the virtual object may include the following steps.

Step 901: A display unit 4021 for a virtual object obtains a current vehicle body pose, where the current vehicle body pose is transmitted by a vehicle body pose calculation unit 4011 to the display unit 4021 for the virtual object.

In this embodiment, the current vehicle body pose transmitted by the vehicle body pose calculation unit 4011 to the display unit 4021 for the virtual object is a vehicle body pose that is determined by the vehicle body pose calculation unit 4011 based on data of a vehicle-mounted sensor after obtaining the data of the vehicle-mounted sensor and that is after anti-shake compensation. Refer to FIG. 10. In this embodiment, the current vehicle body pose obtained by the display unit 4021 for the virtual object may be a vehicle body pose at a moment 3.

Specifically, the vehicle body pose after the anti-shake compensation is obtained after the vehicle body pose calculation unit 4011 obtains a second jitter parameter measured by a second motion detection apparatus 4012 and performs the anti-shake compensation on the current vehicle body pose based on the second shake parameter; the second motion detection apparatus 4012 is rigidly connected to the vehicle body pose calculation unit 4011, and the vehicle body pose calculation unit 4011 is non-rigidly connected to the display unit 4021 for the virtual object.

Step 902: The display unit 4021 for the virtual object determines a current pose of the display unit 4021 for the virtual object based on the vehicle body pose after the anti-shake compensation and according to a pre-calibrated physical transformation relationship between a vehicle body and the display unit for the virtual object.

Similarly, in this embodiment, the current pose of the display unit 4021 for the virtual object is determined by the display unit 4021 for the virtual object based on the vehicle body pose after the anti-shake compensation after obtaining the vehicle body pose after the anti-shake compensation that is transmitted by the vehicle body pose calculation unit 4011. Therefore, with reference to FIG. 10, in this embodiment, the current pose of the display unit 4021 for the virtual object may be a pose of the display unit 4021 for the virtual object at an end moment (namely, a moment 4) of a transmission latency.

Step 903: The display unit 4021 for the virtual object determines a relative shake between a vehicle chassis and the display unit 4021 for the virtual object based on a first shake parameter measured by a first motion detection apparatus 4022 and the second shake parameter measured by the second motion detection apparatus 4012.

Step 904: The display unit 4021 for the virtual object performs anti-shake compensation on the current pose of the display unit 4021 for the virtual object based on the relative shake.

Step 905: The display unit 4021 for the virtual object obtains the first shake parameter measured by the first motion detection apparatus 4022 during the transmission latency of the vehicle body pose, where the first motion detection apparatus 4022 is rigidly connected to the display unit 4021 for the virtual object, and the first shake parameter may be a shake parameter of the display unit 4021 for the virtual object.

Because apparatuses of a chassis domain 401 and a cockpit domain 402 are generally non-rigidly connected, and there is a data transmission latency between the apparatuses, the transmission latency of the vehicle body pose may be time used by the vehicle body pose calculation unit 4011 to transmit the current vehicle body pose to the display unit 4021 for the virtual object.

In this embodiment, that the first motion detection apparatus is rigidly connected to the display unit 4021 for the virtual object may be: The first motion detection apparatus is mounted on a component rigidly connected to the display unit 4021 for the virtual object.

Step 906: The display unit 4021 for the virtual object obtains a pose change of the display unit 4021 for the virtual object during the transmission latency of the vehicle body pose based on the first shake parameter measured during the transmission latency of the vehicle body pose; and performs, based on the pose change, compensation on an anti-shake-compensated pose of the display unit 4021 for the virtual object.

Step 907: The display unit 4021 for the virtual object predicts a third shake parameter during rendering of the virtual object based on a historical shake parameter measured by the first motion detection apparatus 4022.

Step 908: The display unit 4021 for the virtual object determines a pose of the display unit 4021 for the virtual object at a display moment of the virtual object based on the third shake parameter and a compensated pose of the display unit 4021 for the virtual object.

Specifically, determining the pose of the display unit 4021 for the virtual object at the display moment of the virtual object based on the third shake parameter and the compensated pose of the display unit 4021 for the virtual object may be: The display unit 4021 for the virtual object determines a pose of the display unit 4021 for the virtual object at a rendering start moment of the virtual object based on the compensated pose of the display unit 4021 for the virtual object; and obtains the pose of the display unit 4021 for the virtual object at the display moment of the virtual object based on the third shake parameter and the pose of the display unit 4021 for the virtual object at the rendering start moment of the virtual object.

During specific implementation, obtaining the pose of the display unit 4021 for the virtual object at the display moment of the virtual object based on the third shake parameter and the pose of the display unit 4021 for the virtual object at the rendering start moment of the virtual object may be: obtaining an initial pose value of the display unit 4021 for the virtual object at the display moment of the virtual object based on the pose of the display unit 4021 for the virtual object at the rendering start moment of the virtual object and the third shake parameter, and smoothing the initial pose value of the display unit 4021 for the virtual object at the display moment of the virtual object based on a historical pose of the display unit 4021 for the virtual object, to finally obtain the pose of the display unit 4021 for the virtual object at the display moment of the virtual object.

The method provided in this embodiment may be applied to a scenario in which the vehicle body pose calculation unit 4011 on the chassis is non-rigidly connected to the display unit 4021 for the virtual object. In some examples, when the vehicle body pose calculation unit 4011 on the chassis is non-rigidly connected to the display unit 4021 for the virtual object, the display unit 4021 for the virtual object needs to perform anti-shake compensation and latency compensation on the pose of the display unit 4021 for the virtual object based on the first shake parameter measured by the first motion detection apparatus 4022 and the second shake parameter measured by the second motion detection apparatus 4012. FIG. 10 is a diagram of operating timing according to another embodiment of this application. As shown in FIG. 10, in this embodiment, there is a relative shake between the vehicle body pose calculation unit 4011 and the display unit 4021 for the virtual object. In this case, there is a need to perform anti-shake compensation and latency compensation on the pose of the display unit 4021 for the virtual object based on the first shake parameter measured by the first motion detection apparatus 4022 and the second shake parameter measured by the second motion detection apparatus 4012.

According to the method for determining the pose of the display unit for the virtual object, the virtual object displayed by the display unit 4021 for the virtual object can match an actual scene, and does not shake due to impact of vehicle body bumping. When the vehicle body pose calculation unit 4011 on the chassis is non-rigidly connected to the display unit 4021 for the virtual object, in this embodiment, anti-shake compensation and latency compensation are performed on the pose of the display unit 4021 for the virtual object based on the first shake parameter measured by the first motion detection apparatus 4022 and the second shake parameter measured by the second motion detection apparatus 4012. This can resolve a problem of a pose calculation error caused by the relative shake and the data transmission latency between the vehicle body pose calculation unit 4011 and the display unit 4021 for the virtual object. In addition, in this embodiment, the pose of the display unit 4021 for the virtual object at the display moment of the virtual object is further predicted based on the historical shake parameter of the display unit 4021 for the virtual object, to resolve a problem that the pose of the display unit 4021 for the virtual object at the display moment of the virtual object cannot be obtained because there is no sensor data during rendering.

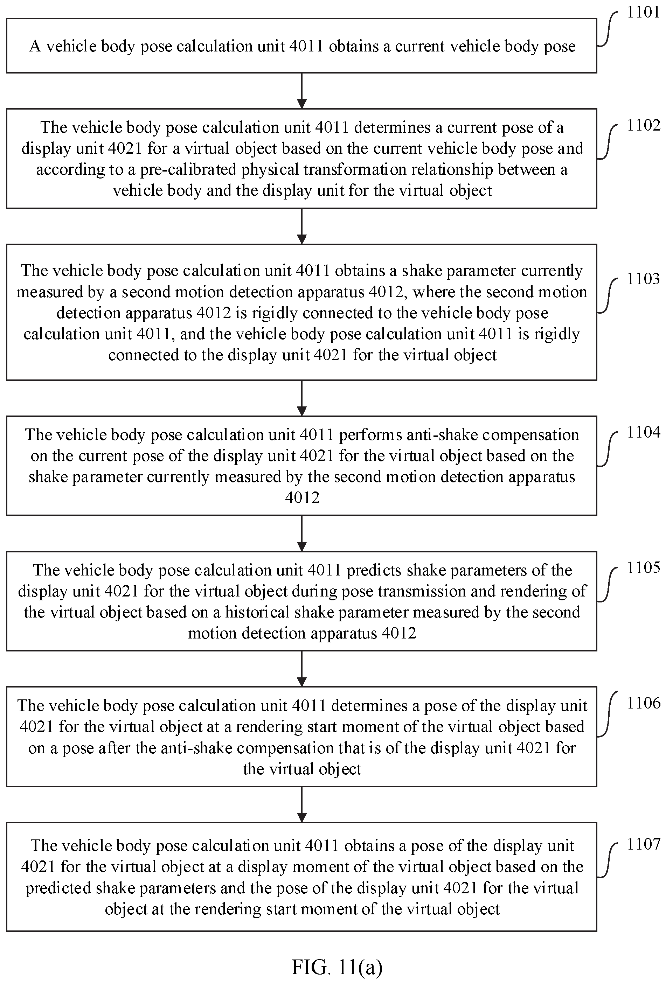

FIG. 11(a) is a flowchart of a method for determining a pose of a display unit for a virtual object according to still another embodiment of this application. FIG. 11(b) is a diagram of operating timing according to still another embodiment of this application. As shown in FIG. 11(a) and FIG. 11(b), the method for determining the pose of the display unit for the virtual object may include the following steps.

Step 1101: A vehicle body pose calculation unit 4011 obtains a current vehicle body pose.

Specifically, that the vehicle body pose calculation unit 4011 obtains the current vehicle body pose may be: The vehicle body pose calculation unit 4011 obtains data of a vehicle-mounted sensor, and determines the current vehicle body pose based on the data of the vehicle-mounted sensor. Refer to FIG. 11(b). In this embodiment, the current vehicle body pose is determined by the vehicle body pose calculation unit 4011 based on the data of the vehicle-mounted sensor. Therefore, the current vehicle body pose may be a vehicle body pose at an end moment (namely, a moment 5) of current-frame pose calculation time.

Step 1102: The vehicle body pose calculation unit 4011 determines a current pose of a display unit 4021 for a virtual object based on the current vehicle body pose and according to a pre-calibrated physical transformation relationship between a vehicle body and the display unit for the virtual object.

In this embodiment, the current pose of the display unit 4021 for the virtual object is determined by the vehicle body pose calculation unit 4011 based on the current vehicle body pose. In this case, it may be considered that the vehicle body pose calculation unit 4011 can determine the current pose of the display unit 4021 for the virtual object upon determining the current vehicle body pose. Therefore, with reference to FIG. 11(b), in this embodiment, the current pose of the display unit 4021 for the virtual object may be understood as a pose of the display unit 4021 for the virtual object at the moment 5.

Step 1103: The vehicle body pose calculation unit 4011 obtains a shake parameter currently measured by a second motion detection apparatus 4012, where the second motion detection apparatus 4012 is rigidly connected to the vehicle body pose calculation unit 4011, and the vehicle body pose calculation unit 4011 is rigidly connected to the display unit 4021 for the virtual object.

Step 1104: The vehicle body pose calculation unit 4011 performs anti-shake compensation on the current pose of the display unit 4021 for the virtual object based on the shake parameter currently measured by the second motion detection apparatus 4012.

Step 1105: The vehicle body pose calculation unit 4011 predicts shake parameters of the display unit 4021 for the virtual object during pose transmission and rendering of the virtual object based on a historical shake parameter measured by the second motion detection apparatus 4012.

Step 1106: The vehicle body pose calculation unit 4011 determines a pose of the display unit 4021 for the virtual object at a rendering start moment of the virtual object based on an anti-shake-compensated pose of the display unit 4021 for the virtual object.

Step 1107: The vehicle body pose calculation unit 4011 obtains a pose of the display unit 4021 for the virtual object at a display moment of the virtual object based on the predicted shake parameters and the pose of the display unit 4021 for the virtual object at the rendering start moment of the virtual object.

Specifically, that the vehicle body pose calculation unit 4011 obtains the pose of the display unit 4021 for the virtual object at the display moment of the virtual object based on the predicted shake parameters and the pose of the display unit 4021 for the virtual object at the rendering start moment of the virtual object may be: The vehicle body pose calculation unit 4011 obtains an initial pose value of the display unit 4021 for the virtual object at the display moment of the virtual object based on the pose of the display unit 4021 for the virtual object at the rendering start moment of the virtual object and the predicted shake parameters, smooths the initial pose value of the display unit 4021 for the virtual object at the display moment of the virtual object based on a historical pose of the display unit 4021 for the virtual object, to finally obtain the pose of the display unit 4021 for the virtual object at the display moment of the virtual object, and sends the pose at the display moment to the display unit 4021 for the virtual object.

In the method for determining the pose of the display unit for the virtual object, after obtaining the current vehicle body pose, the vehicle body pose calculation unit 4011 determines the current pose of the display unit 4021 for the virtual object based on the current vehicle body pose. Then, the vehicle body pose calculation unit 4011 obtains the shake parameter currently measured by the second motion detection apparatus 4012 rigidly connected to the vehicle body pose calculation unit 4011, and performs the anti-shake compensation on the current pose of the display unit 4021 for the virtual object based on the currently measured shake parameter. Further, the vehicle body pose calculation unit 4011 predicts the shake parameters of the display unit 4021 for the virtual object during pose transmission and rendering of the virtual object based on the historical shake parameter measured by the second motion detection apparatus 4012, and determines the pose of the display unit 4021 for the virtual object at the display moment of the virtual object based on the predicted shake parameters and the anti-shake-compensated pose of the display unit 4021 for the virtual object. Finally, the vehicle body pose calculation unit 4011 transmits the pose of the display unit 4021 for the virtual object at the display moment of the virtual object to the display unit 4021 for the virtual object. In this way, the virtual object displayed by the display unit 4021 for the virtual object can match an actual scene, and does not shake due to impact of vehicle body bumping.

When the vehicle body pose calculation unit 4011 is rigidly connected to the display unit 4021 for the virtual object, in this embodiment, a pose of the display unit 4021 for the virtual object after a data transmission latency and rendering time of the virtual object may be predicted in advance based on a historical shake parameter of a chassis, to resolve a problem of a pose shake caused by a lack of sensor data during the transmission latency and rendering.

It should be noted that the method for determining the pose of the display unit for the virtual object provided in embodiments of this application may be applied to a vehicle AR-HUD, and may be further applied to a device with an AR-HUD function, such as an aircraft, an excavator, or a crane.

It may be understood that some or all of the steps or operations in the foregoing embodiments are merely examples, and other operations or variants of various operations may be further performed in embodiments of this application. In addition, the steps may be performed in another sequence different from that presented in the foregoing embodiments, and not all the operations in the foregoing embodiments may be performed.

It can be understood that, to implement the foregoing functions, an electronic device includes corresponding hardware and/or software modules for performing the functions. Algorithm steps in the examples described with reference to embodiments disclosed in this application can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it shall not be considered that the implementation goes beyond the scope of this application.

In embodiments, the electronic device may be divided into functional modules according to the foregoing method embodiments. For example, each functional module may be obtained through division based on each corresponding function, or two or more functions may be integrated into one module. The integrated module may be implemented in a form of hardware. It should be noted that module division in embodiments is an example and is merely logical function division. During actual implementation, there may be another division manner.

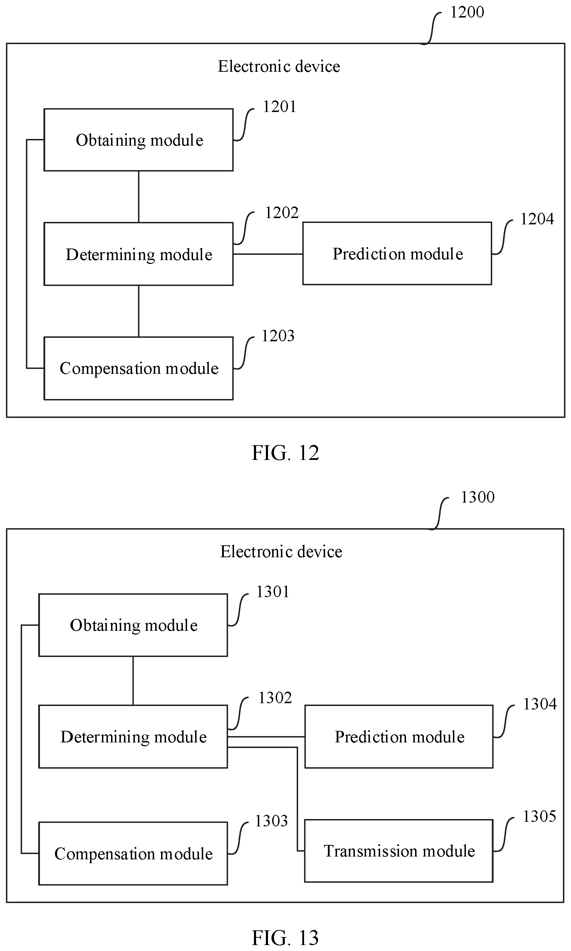

FIG. 12 is a diagram of a structure of an electronic device according to an embodiment of this application. When functional modules are obtained through division based on corresponding functions, FIG. 12 is a diagram of possible composition of an electronic device 1200 in the foregoing embodiments. As shown in FIG. 12, the electronic device 1200 may include an obtaining module 1201, a determining module 1202, a compensation module 1203, and a prediction module 1204.

The obtaining module 1201 is configured to obtain a current vehicle body pose, where the current vehicle body pose is transmitted by a vehicle body pose calculation unit to a display unit for a virtual object.

The determining module 1202 is configured to determine a current pose of the display unit for the virtual object based on the current vehicle body pose. In this embodiment, the determining module 1202 is specifically configured to determine the current pose of the display unit for the virtual object based on the current vehicle body pose and according to a pre-calibrated physical transformation relationship between a vehicle body and the display unit for the virtual object.

The obtaining module 1201 is further configured to: obtain a first shake parameter measured by a first motion detection apparatus during a transmission latency of the vehicle body pose; and obtain a pose change of the display unit for the virtual object during the transmission latency of the vehicle body pose based on the first shake parameter measured during the transmission latency of the vehicle body pose, where the first motion detection apparatus is rigidly connected to the display unit for the virtual object, and the first shake parameter includes a shake parameter of the display unit for the virtual object. That the first motion detection apparatus is rigidly connected to the display unit for the virtual object may be: The first motion detection apparatus is mounted on a component rigidly connected to the display unit for the virtual object.

The compensation module 1203 is configured to perform compensation on the current pose of the display unit for the virtual object based on the pose change.

The prediction module 1204 is configured to predict a third shake parameter during rendering of the virtual object based on a historical shake parameter measured by the first motion detection apparatus.

The determining module 1202 is further configured to determine a pose of the display unit for the virtual object at a display moment of the virtual object based on the third shake parameter and a compensated pose of the display unit for the virtual object.

In an implementation of this embodiment, the current vehicle body pose transmitted by the vehicle body pose calculation unit to the display unit for the virtual object is determined by the vehicle body pose calculation unit based on data of a vehicle-mounted sensor after obtaining the data of the vehicle-mounted sensor.

The determining module 1202 is specifically configured to determine a pose of the display unit for the virtual object at a rendering start moment of the virtual object based on the compensated pose of the display unit for the virtual object.

The obtaining module 1201 is specifically configured to obtain the pose of the display unit for the virtual object at the display moment of the virtual object based on the third shake parameter and the pose of the display unit for the virtual object at the rendering start moment of the virtual object. In this embodiment, the obtaining module 1201 is specifically configured to: obtain an initial pose value of the display unit for the virtual object at the display moment of the virtual object based on the pose of the display unit for the virtual object at the rendering start moment of the virtual object and the third shake parameter, and smooth the initial pose value of the display unit for the virtual object at the display moment of the virtual object based on a historical pose of the display unit for the virtual object, to obtain the pose of the display unit for the virtual object at the display moment of the virtual object.

In another implementation of this embodiment, the current vehicle body pose transmitted by the vehicle body pose calculation unit to the display unit for the virtual object may be a vehicle body pose after anti-shake compensation, the vehicle body pose after the anti-shake compensation is obtained after the vehicle body pose calculation unit obtains a second jitter parameter measured by a second motion detection apparatus and performs the anti-shake compensation on the current vehicle body pose based on the second shake parameter; the second motion detection apparatus is rigidly connected to the vehicle body pose calculation unit.

In this case, the determining module 1202 is specifically configured to determine the current pose of the display unit for the virtual object based on the vehicle body pose after the anti-shake compensation and according to a pre-calibrated physical transformation relationship between a vehicle body and the display unit for the virtual object.

Further, the determining module 1202 is configured to: after determining the current pose of the display unit for the virtual object, determine a relative shake between a vehicle chassis and the display unit for the virtual object based on the first shake parameter measured by the first motion detection apparatus and the second shake parameter measured by the second motion detection apparatus.

The compensation module 1203 is specifically configured to perform anti-shake compensation on the current pose of the display unit for the virtual object based on the relative shake.

In this implementation, the compensation module 1203 is specifically configured to perform, based on the pose change, the compensation on a anti-shake-compensated pose of the display unit for the virtual object.

It should be noted that all related content of the steps in the method embodiments shown in FIG. 7 to FIG. 10 in this application may be cited in function descriptions of corresponding functional modules. Details are not described herein again.

The electronic device 1200 provided in this embodiment is configured to perform the method for determining the pose of the display unit for the virtual object provided in the embodiments shown in FIG. 7 to FIG. 10 in this application, and therefore can achieve same effects as the foregoing method.

It should be understood that the electronic device 1200 may serve as a display unit for a virtual object, and the electronic device 1200 may be implemented by using the structure shown in FIG. 6. Functions of the obtaining module 1201, the determining module 1202, the compensation module 1203, and the prediction module 1204 may be implemented by the processor 410 in the electronic device 400 shown in FIG. 6.

When an integrated unit is used, the electronic device 1200 may include a processing module, a storage module, and a communication module.

The processing module may be configured to control and manage an action of the electronic device 1200, for example, may be configured to support the electronic device 1200 in performing steps performed by the obtaining module 1201, the determining module 1202, the compensation module 1203, and the prediction module 1204. The storage module may be configured to support the electronic device 1200 in storing program code, data, and the like. The communication module may be configured to support the electronic device 1200 in communicating with another device.

The processing module may be a processor or a controller, and may implement or execute various example logic blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor, and the storage module is a memory, the electronic device 1200 in this embodiment may be a device having the structure shown in FIG. 6.

FIG. 13 is a diagram of a structure of an electronic device according to another embodiment of this application. When functional modules are obtained through division based on corresponding functions, FIG. 13 is a diagram of possible composition of an electronic device 1300 in the foregoing embodiments. As shown in FIG. 13, the electronic device 1300 may include an obtaining module 1301, a determining module 1302, a compensation module 1303, a prediction module 1304, and a transmission module 1305.

The obtaining module 1301 is configured to obtain a current vehicle body pose.

The determining module 1302 is configured to determine a current pose of a display unit for a virtual object based on the current vehicle body pose. In this embodiment, the determining module 1302 is specifically configured to determine the current pose of the display unit for the virtual object based on the current vehicle body pose and according to a pre-calibrated physical transformation relationship between a vehicle body and the display unit for the virtual object.

The obtaining module 1301 is further configured to obtain a shake parameter currently measured by a second motion detection apparatus, where the second motion detection apparatus is rigidly connected to a vehicle body pose calculation unit, and the vehicle body pose calculation unit is rigidly connected to the display unit for the virtual object.

The compensation module 1303 is configured to perform anti-shake compensation on the current pose of the display unit for the virtual object based on the shake parameter currently measured by the second motion detection apparatus.

The prediction module 1304 is configured to predict shake parameters of the display unit for the virtual object during pose transmission and rendering of the virtual object based on a historical shake parameter measured by the second motion detection apparatus.

The determining module 1302 is further configured to determine a pose of the display unit for the virtual object at a display moment of the virtual object based on the predicted shake parameters and a anti-shake-compensated pose of the display unit for the virtual object. In this embodiment, the determining module 1302 is specifically configured to: determine a pose of the display unit for the virtual object at a rendering start moment of the virtual object based on the anti-shake-compensated pose of the display unit for the virtual object; and obtain the pose of the display unit for the virtual object at the display moment of the virtual object based on the predicted shake parameters and the pose of the display unit for the virtual object at the rendering start moment of the virtual object. During specific implementation, the determining module 1302 is specifically configured to: obtain an initial pose value of the display unit for the virtual object at the display moment of the virtual object based on the pose of the display unit for the virtual object at the rendering start moment of the virtual object and the predicted shake parameters, and smooth the initial pose value of the display unit for the virtual object at the display moment of the virtual object based on a historical pose of the display unit for the virtual object, to finally obtain the pose of the display unit for the virtual object at the display moment of the virtual object.

The transmission module 1305 is configured to transmit the pose of the display unit for the virtual object at the display moment of the virtual object to the display unit for the virtual object.

In this embodiment, the obtaining module 1301 is specifically configured to obtain data of a vehicle-mounted sensor.

The determining module 1302 is specifically configured to determine the current vehicle body pose based on the data of the vehicle-mounted sensor.

It should be noted that all related content of the steps in the method embodiment shown in FIG. 11(a) and FIG. 11(b) in this application may be cited in function descriptions of corresponding functional modules. Details are not described herein again.

The electronic device 1300 provided in this embodiment is configured to perform the method for determining the pose of the display unit for the virtual object provided in the embodiment shown in FIG. 11(a) and FIG. 11(b) in this application, and therefore can achieve same effects as the foregoing method.

It should be understood that the electronic device 1300 may serve as a vehicle body pose calculation unit, and the electronic device 1300 may be implemented by using the structure shown in FIG. 6. Functions of the obtaining module 1301, the determining module 1302, the compensation module 1303, the prediction module 1304, and the transmission module 1305 may be implemented by the processor 410 in the electronic device 400 shown in FIG. 6.

When an integrated unit is used, the electronic device 1300 may include a processing module, a storage module, and a communication module.

The processing module may be configured to control and manage an action of the electronic device 1300, for example, may be configured to support the electronic device 1300 in performing steps performed by the obtaining module 1301, the determining module 1302, the compensation module 1303, the prediction module 1304, and the transmission module 1305. The storage module may be configured to support the electronic device 1300 in storing program code, data, and the like. The communication module may be configured to support the electronic device 1300 in communicating with another device.

The processing module may be a processor or a controller, and may implement or execute various example logic blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor, and the storage module is a memory, the electronic device 1300 in this embodiment may be a device having the structure shown in FIG. 6.

An embodiment of this application further provides a computer-readable storage medium. The computer-readable storage medium stores a computer program. When the computer program runs on a computer, the computer is enabled to perform the method provided in the embodiments shown in FIG. 7 to FIG. 10 in this application.

An embodiment of this application further provides a computer-readable storage medium. The computer-readable storage medium stores a computer program. When the computer program runs on a computer, the computer is enabled to perform the method provided in the embodiment shown in FIG. 11(a) and FIG. 11(b) in this application.

An embodiment of this application further provides a computer program product. The computer program product includes a computer program. When the computer program runs on a computer, the computer is enabled to perform the method provided in the embodiments shown in FIG. 7 to FIG. 10 in this application.

An embodiment of this application further provides a computer program product. The computer program product includes a computer program. When the computer program runs on a computer, the computer is enabled to perform the method provided in the embodiment shown in FIG. 11(a) and FIG. 11(b) in this application.

In embodiments of this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists. A and B may be singular or plural. The character "/" generally indicates an "or" relationship between the associated objects. "At least one of the following items" and similar expressions refer to any combination of these items, including a single item or any combination of a plurality of items. For example, at least one of a, b, and c may indicate a, b, c, a and b, a and c, b and c, or a, b, and c, where a, b, and c may be singular or plural.

A person of ordinary skill in the art may be aware that the units and algorithm steps described in embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, when any function is implemented in a form of software functional unit and sold or used as an independent product, the function may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a pose of a display unit for a virtual object, comprising:
determining a current pose of the display unit for the virtual object based on a current vehicle body pose;
obtaining a shake parameter measured by a motion detection apparatus; and
determining a pose of the display unit for the virtual object at a display moment of the virtual object based on the shake parameter and the current pose of the display unit for the virtual object.

2. The method according to claim 1, wherein the current vehicle body pose is transmitted by a vehicle body pose calculation unit to the display unit for the virtual object, the motion detection apparatus comprises a first motion detection apparatus, and the first motion detection apparatus is rigidly connected to the display unit for the virtual object; and
obtaining the shake parameter measured by the motion detection apparatus comprises:
obtaining a first shake parameter measured by the first motion detection apparatus during a transmission latency of the vehicle body pose.

3. The method according to claim 2, wherein determining the pose of the display unit for the virtual object at the display moment of the virtual object based on the shake parameter and the current pose of the display unit for the virtual object comprises:
performing compensation on the current pose of the display unit for the virtual object based on the first shake parameter;
predicting a third shake parameter during rendering of the virtual object based on a historical shake parameter measured by the first motion detection apparatus; and
determining the pose of the display unit for the virtual object at the display moment of the virtual object based on the third shake parameter and a compensated pose of the display unit for the virtual object.

4. The method according to claim 3, wherein performing the compensation on the current pose of the display unit for the virtual object based on the first shake parameter measured during the transmission latency of the vehicle body pose comprises:
obtaining a pose change of the display unit for the virtual object during the transmission latency of the vehicle body pose based on the first shake parameter; and
performing the compensation on the current pose of the display unit for the virtual object based on the pose change.

5. The method according to claim 1, wherein determining the current pose of the display unit for the virtual object based on the current vehicle body pose comprises:
determining the current pose of the display unit for the virtual object based on the current vehicle body pose and according to a pre-calibrated physical transformation relationship between a vehicle body and the display unit for the virtual object.

6. The method according to claim 3, wherein determining the pose of the display unit for the virtual object at the display moment of the virtual object based on the third shake parameter and the compensated pose of the display unit for the virtual object comprises:
determining a pose of the display unit for the virtual object at a rendering start moment of the virtual object based on the compensated pose of the display unit for the virtual object; and
obtaining the pose of the display unit for the virtual object at the display moment of the virtual object based on the third shake parameter and the pose of the display unit for the virtual object at the rendering start moment of the virtual object.

7. The method according to claim 3, wherein the current vehicle body pose transmitted by the vehicle body pose calculation unit to the display unit for the virtual object comprises a vehicle body pose after anti-shake compensation, the vehicle body pose after the anti-shake compensation is obtained after the vehicle body pose calculation unit obtains a second jitter parameter measured by a second motion detection apparatus and performs the anti-shake compensation on the current vehicle body pose based on the second shake parameter; the second motion detection apparatus is rigidly connected to the vehicle body pose calculation unit, and the vehicle body pose calculation unit is non-rigidly connected to the display unit for the virtual object.

8. The method according to claim 7, wherein determining the current pose of the display unit for the virtual object based on the current vehicle body pose comprises:
determining the current pose of the display unit for the virtual object based on the vehicle body pose after the anti-shake compensation and according to a pre-calibrated physical transformation relationship between a vehicle body and the display unit for the virtual object.

9. The method according to claim 8, wherein after determining the current pose of the display unit for the virtual object based on the vehicle body pose after the anti-shake compensation and according to the pre-calibrated physical transformation relationship between the vehicle body and the display unit for the virtual object, the method further comprises:
determining a relative shake between a vehicle chassis and the display unit for the virtual object based on the first shake parameter measured by the first motion detection apparatus and the second shake parameter measured by the second motion detection apparatus; and
performing anti-shake compensation on the current pose of the display unit for the virtual object based on the relative shake.

10. The method according to claim 9, wherein performing the compensation on the current pose of the display unit for the virtual object based on the first shake parameter comprises:
obtaining a pose change of the display unit for the virtual object during the transmission latency of the vehicle body pose based on the first shake parameter; and
performing, based on the pose change, the compensation on a anti-shake-compensated pose of the display unit for the virtual object.

11. The method according to claim 2, wherein that the first motion detection apparatus is rigidly connected to the display unit for the virtual object comprises:
the first motion detection apparatus is mounted on a component rigidly connected to the display unit for the virtual object.

12. The method according to claim 1, wherein the motion detection apparatus comprises a second motion detection apparatus, the second motion detection apparatus is rigidly connected to a vehicle body pose calculation unit, and the vehicle body pose calculation unit is rigidly connected to the display unit for the virtual object; and
determining the pose of the display unit for the virtual object at the display moment of the virtual object based on the shake parameter and the current pose of the display unit for the virtual object comprises:
performing anti-shake compensation on the current pose of the display unit for the virtual object based on a shake parameter currently measured by the second motion detection apparatus;
predicting shake parameters of the display unit for the virtual object during pose transmission and rendering of the virtual object based on a historical shake parameter measured by the motion detection apparatus; and
determining the pose of the display unit for the virtual object at the display moment of the virtual object based on the predicted shake parameters and a anti-shake-compensated pose of the display unit for the virtual object.

13. The method according to claim 12, wherein determining the pose of the display unit for the virtual object at the display moment of the virtual object based on the predicted shake parameters and the anti-shake-compensated pose of the display unit for the virtual object comprises:
determining a pose of the display unit for the virtual object at a rendering start moment of the virtual object based on the anti-shake-compensated pose of the display unit for the virtual object; and
obtaining the pose of the display unit for the virtual object at the display moment of the virtual object based on the predicted shake parameters and the pose of the display unit for the virtual object at the rendering start moment of the virtual object.

14. An apparatus for determining a pose of a display unit for a virtual object, comprising:
a determining module, configured to determine a current pose of the display unit for the virtual object based on a current vehicle body pose; and
an obtaining module, configured to obtain a shake parameter measured by a motion detection apparatus, wherein
the determining module is further configured to determine a pose of the display unit for the virtual object at a display moment of the virtual object based on the shake parameter and the current pose of the display unit for the virtual object.

15. An electronic device, comprising:
one or more processors, a memory, a plurality of applications, and one or more computer programs, wherein the one or more computer programs are stored in the memory, the one or more computer programs comprise instructions, and when the instructions are executed by the electronic device, the electronic device is enabled to perform the method according to any one of claims 1 to 13.

16. A computer-readable storage medium, wherein the computer-readable storage medium stores a computer program, and when the computer program runs on a computer, the computer is enabled to perform the method according to any one of claims 1 to 13.
